# EUROPEAN PATENT APPLICATION

(11) **EP 4 506 863 A1**
(43) Date of publication of application: **12.02.2025**
(21) Application number: 23306341.1
(22) Date of filing: 07.08.2023
(51) Int. Cl.: G06N 10/40

(54) **METHOD AND SYSTEM FOR QUANTUM COMPUTATION**

(71) Applicant: Pasqal S.A.S., 91300 Massy (FR)
(72) Inventor: Dreon, Davide, 913600 Massy (FR); Dumas, Arnaud, 91300 Massy (FR); de Hond, Julius, 91300 Massy (FR); Vaneecloo, Julien, 91300 Massy (FR)
(74) Representative: De Vries & Metman

(57) **Abstract**

A method and a system for quantum computation using a plurality of particles, in an array of optical tweezer traps as a quantum register, are provided. The method comprises: trapping a plurality of particles in a buffer trap, moving the optical tweezer array traps and the buffer trap relative to each other, simultaneously overlapping at least partly the optical tweezer array traps and the buffer trap for filling a plurality of particles from the buffer trap into at least some of the optical tweezer array traps, and forming at least part of the quantum register from at least some of the thus filled optical tweezer array traps offset from the buffer trap.

## Description

### TECHNICAL FIELD

The present disclosure relates to methods and systems for quantum computation using a plurality of particles in an array of optical tweezer traps as a quantum register. In particular to loading particles in such an array.

### BACKGROUND

Quantum computation relies on accurate control over qubits and/or qudits. Quantum computing devices may be based on using neutral atoms as quantum registers; e.g. see the papers "Quantum computing with neutral atoms" by L. Henriet et al., arXiv.2006.12326 and "A dual-element, two-dimensional atom array with continuous-mode operation" by K. Singh et al., arXiv.2110.05515.

Generally, in these systems, the quantum register is formed with neutral atoms, loaded from a background gas of cold atoms, and trapped in arrays of optical traps, known as optical tweezers. The background gas may cooled down in the form of a magneto-optical trap (MOT).

Preparing the quantum register for each computation cycle typically comprises the following steps:
- loading atoms in the tweezer array from the background cold atom gas (e.g. initial stochastic loading or near-deterministic loading),
- rearranging the atoms in the tweezer array (atomic arrangement) into the desired positions, using an additional displaceable optical tweezer (moving tweezer).

Thereafter quantum computation operations may be performed on the thus prepared quantum register.

At the end of each cycle, the quantum register is emptied. Then, the quantum register needs to be reloaded using the same process for a new cycle.

There is a need to improve the efficiency of the loading process, in order to reduce the time required to prepare the quantum register, and in turn improve the repetition rate of the quantum computer (e.g., the frequency at which quantum computations can be performed on the hardware).

It is noted that the paper "Reservoir-based deterministic loading of single-atom tweezer arrays" by L. Pause et al., arXiv.2302.12730, describes a modular scheme built on an additional cold-atom reservoir and an array of buffer traps effectively decoupling cold-atom accumulation and single-atom supply from the quantum-register operation. A microlens-based tweezer array is coupled to a cloud of laser-cooled atoms held in an auxiliary large-focus dipole trap by utilizing atom transport and buffer traps for dedicated single-atom supply. Deterministic loading of a hexagonal target structure with atoms solely originating from the reservoir trap is demonstrated. The results facilitate increased data rates and unlock a path to continuous operation of individual-atom tweezer arrays in quantum science making use of discrete functional modules, operated in parallel and spatially separated.

US 2021/0279628 relates to transport-based qubit-array loading, and discloses: "When a molecule is lost from a site of a qubit array, the site can be identified as a "target" site. A target site can be reloaded by transporting a molecule from a reservoir at least two millimeters to the target site. Alternatively, in response to the identifying, a molecule that has been transferred from the reservoir to a qubit-array region including the qubit array can be transferred to the target site. Quantum-logic language (QLL) programs can continue qubit operations on the array during transfers from the reservoir to the qubit region. Such operations can also continue during transfer from within the qubit region to a target site; in some cases, these latter operations are limited to sections of the qubit array not including a target site."

Exemplary further papers referring to loading optical microtraps are T. Grünzweig et al., "Near-deterministic preparation of a single atom in an optical microtrap" Nature Physics vol. 6: 951-954 (2010), and A. Jenkins et al., "Ytterbium Nuclear-Spin Qubits in an Optical Tweezer Array", Phys. Rev. X 12, 021027 (2022); Erratum Phys. Rev. X 13, 029902 (2023).

### SUMMARY

In view of the preceding, herewith is provided a method for quantum computation using a plurality of particles in an array of optical tweezer traps as a quantum register. The method comprises:
trapping a plurality of the particles in a buffer trap,
moving the optical tweezer array traps and the buffer trap relative to each other,
simultaneously overlapping at least partly the optical tweezer array traps and the buffer trap for filling a plurality of particles from the buffer trap into at least some of the optical tweezer array traps, and
forming at least part of the quantum register from at least some of the thus filled optical tweezer array traps offset from the buffer trap.

The particles in the array of optical tweezers traps may form the quantum register, as indicated *supra.* The particles may be atoms, in particular neutral atoms. The buffer trap may trap the particles as a gas cloud, in particular a gas cloud of neutral atoms, which may be ultra cold.

The buffer trap serves for loading and/or at least temporarily storing multiple particles for loading in parallel multiple optical tweezer array traps, which may each hold a predetermined number of particles, in particular zero, one, or possibly two particles. E.g. the buffer trap may (be configured to) hold large numbers of particles, e.g. many orders of magnitude more than an optical tweezer array trap such as hundreds, thousands or even millions of articles. The buffer trap and optical tweezer array traps may however be of the same general type such as being optical dipole traps. Simultaneously overlapping at least partly the buffer trap and multiple optical tweezer array traps, possibly all, facilitates parallel loading of the respective optical tweezer array traps.

The particles, preferably all particles, trapped in the optical tweezer array traps may provide qubits and/or qudits in the quantum register; hence the particles could be aptly named "qubit particles" or "qudit particles". Note that a qudit is a multilevel computational unit alternative to the conventional 2-level qubit. Compared to a qubit, a qudit provides a larger state space to store and process information, and thus can provide reduction of the circuit complexity, simplification of the experimental setup and enhancement of the algorithm efficiency. E.g. see Y. Wang et al. "Qudits and High-Dimensional Quantum Computing", Front. Phys., 10 November 2020 Sec. Quantum Engineering and Technology, Vol. 8 - 2020, https://doi.org/10.3389/fphy.2020.589504. One or more qudits may form, or be used as, qubits in, or at least associated with, a 2-level system.

The buffer trap may be arranged at a buffer trap location. The quantum register may be arranged at a register location spatially separated from each other. A suitable separation may be multiple times a buffer trap size or multiple times a register size, the respective size may be determined along in a direction of a shortest separation between the buffer trap and the register The buffer trap location and the register location may be offset several millimetres. The buffer trap and the optical tweezer array traps may be in a same chamber of a quantum computation device.

The filling of the optical tweezers traps may comprise filling vacant traps / trap sites of the optical tweezers traps while retaining in at least part of the optical tweezers traps at least part of the particles previously filled in the optical tweezers traps.

The method may comprise use of, and/or filing of, more than one array of optical tweezer traps to form a quantum register; and/or comprise use of, and/or filing of, more than one quantum register in a single array of optical tweezer traps and/or in plural arrays of optical tweezer traps.

Arrays of optical tweezer traps may suitably be provided as a 2-or 3-dimensional array, by generation of separate light beams and/or controlled optical intensity fields such as of one or more of 1-, 2- and/or 3-dimensional optical lattices (e.g. formed by standing waves and/or multi-beam interference), Talbot tweezer arrays (e.g. see M. Schlosser et al. arXiv:1902.05424), etc.

Moving the optical tweezer array traps and the buffer trap relative to each other in the method may comprise moving the optical tweezer array traps and the buffer trap relative to each other before and/or during the overlapping, but in particular the optical tweezer array traps and the buffer trap are moved relative to each other after the overlapping and/or after the filling at least part of the optical tweezer array traps, to spatially separate filled optical tweezer array traps from the buffer trap. The buffer trap may be filled to a higher density of particles (e.g. in terms of particles per volume, e.g. per cubic micrometer or per cubic millimeter) than a completely filled array of optical tweezer array traps. Also or alternatively, the buffer trap may be maintained and particles trapped therein may remain trapped.

The method may comprise repeating one or more times the steps of moving the buffer trap and the optical tweezer array traps relative to each other and overlapping at least partly the buffer trap and the optical tweezer array traps for filling the optical tweezer array traps with a plurality of particles from the buffer trap, and possibly forming a quantum register from the filled array offset from the buffer trap.

Also or alternatively, the method may comprise repeating one or more times the steps of overlapping at least partly the buffer trap and the optical tweezer array traps for filling the optical tweezer array traps with a plurality of particles from the buffer trap, and moving the buffer trap and the optical tweezer array traps relative to each other after the filling, and possibly forming a quantum register from the filled array offset from the buffer trap.

The method may comprise loading the buffer trap with particles while performing quantum computation operations using at least some particles in the optical tweezer array traps, which particles may have been filled into the optical tweezer array traps in a previous repetition of the steps of moving and overlapping of the method as set out *supra.*

During or after the overlapping and filling the optical tweezer array traps, the buffer trap may be removed, which may comprise reducing a trap depth and/or switching off a trapping potential, such as - in particular in case the buffer trap comprises an optical trap - reducing intensity of, and/or switching off completely, an electrical and/or optical trapping field such as a light beam providing the buffer trap as an optical buffer trap. Thereafter the buffer trap may be recreated and the buffer trap be loaded again with particles while performing quantum computation operations using at least some particles in the optical tweezer array traps.

After performing one or more quantum computation operations using at least some particles in the optical tweezer array traps, part or all of the particles may be released from at least some of the optical tweezer array traps, which may comprise weakening and/or switching off the respective traps, and/or changing a state of the respective particles to an untrapped state.

A particle source may be provided. Transport of at least part of the particles from a particles source to the buffer trap may be controlled, which may comprise one or more of controlled stopping and/or starting (e.g. controlled interrupting) the transport.

Controlling the transport may also or alternatively comprise accelerating and/or directing (e.g. guiding) optically and/or magnetically at least part of the particles along a predetermined transport trajectory. The transport trajectory may preferably be arranged or controlled to bypass the optical tweezers array traps, at least during performing quantum computation operations, so as to reduce affecting them and/or the quantum register. The transport trajectory may be directed to the buffer trap (or: buffer trap location) for increasing loading efficiency and/or -speed of the buffer trap.

During transport from the source to the buffer trap at least part of the particles may be cooled, at least in two dimensions. Also or alternatively, the particles source may comprise a source trap, for collecting and or concentrating particles, such as a magneto-optical trap. E.g., atoms may be selectively transported from a main atom source using a transport system such as an optical conveyor. Optical conveyors can be implemented with laser beams to create an array of controllably collectively movable standing wave traps, e.g. see Phys. Rev. A 93, 041802(R), Opt. Lett. 45, 1519-1522 (2020), Appl. Phys. B 110, 279-283 (2013). Also or alternatively, atoms may be transported by other means such as by creating a cold beam of atoms using transport systems such as a MOT provided with a push beam (which may be an additional laser beam or provision of a single beam in one direction), a (Zeeman, Stark, other)-slower and/or a low-velocity intense source (see e.g. Phys. Rev. Lett. 77, 3331 (1996)); a transverse plug beam may be used to rapidly switch off a flux from the source. When using such transport systems, a beam of particles can be manipulated and collimated using optical techniques, such as 2-dimensional laser cooling and/or using a bluedetuned donut beam (e.g. see JOSA B 17, 1817-1820 (2000)), which may result in an increased flux towards the buffer trap (or: buffer trap location).

The moving of the buffer trap and the optical tweezer array traps relative to each other may be controlled along a trajectory that is at a nonzero angle to the transport trajectory, in particular at an angle to the transport directory in a range of 30-150 degrees, preferably in a range of 45-135 degrees more preferably in a range of 60-120, e.g. in a range 80-100 degrees.

Moving the optical tweezer array traps and the buffer trap relative to each other may comprise controlling one or more of position, velocity, acceleration and jerk (= time derivative of acceleration) of at least one of the buffer trap and the optical tweezer array traps, relative to each other and/or relative to an external reference, the latter being preferred: changing velocity and/or direction of a filled trap might cause heating and/or loss of contents of the trap (e.g. a particle).

The method may comprise forming the buffer trap as an optical and/or magnetic trap. Preferably the buffer trap comprises or is formed as an optical dipole trap which may have a controllable size and/or which may obviate (use of) magnetic fields. Forming the buffer trap as or with an optical dipole trap may comprise at least partly superposing a plurality of optical dipole beams. An optical trap facilitates control and/or movement of the trap and it may reduce one or more of complexity and/or structural bulk relative to a MOT or a magnetic trap, and it may reduce or prevent affecting and/or quantum computation operations. Influence of the buffer trap on the quantum register may also or alternatively be reduced by increased separation and/or controlling optical and mechanic fields. E.g., the buffer trap may be operated intermittently, at least partly reducing and/or switching off part of optical and/or magnetic trapping fields during one or more quantum computation operations.

During the filling of the optical tweezer array traps with a plurality of particles from the buffer trap, the buffer trap may be adjusted and/or be switched off, at least temporarily. The adjustment may comprise varying a trapping depth and/or stiffness, and/or may comprise varying a trapping size in one or more dimensions. Varying a trapping depth may comprise providing a dimple trap geometry.

Also or alternatively, the method may comprise subjecting, prior to and/or during the overlapping at least partly the optical tweezer array traps and the buffer trap, at least some of the particles in the buffer trap to at least one of cooling, compression, optical pumping, state manipulation. The cooling may comprise one or more of optical molasses cooling, Raman cooling, and velocity-selective coherent population trapping, e.g. see Phys. Rev. Lett. 122, 203202 (2019); Phys. Rev. A 87, 063411 (2013): Phys. Rev. Lett. 76, 2432 (1996), respectively. Such cooling techniques may be associated with a form of trapping, e.g. the associated optical and/or magnetic fields providing a trap.

Further, associated with the preceding, herein is provided an optical trapping system for quantum computation, the system in particular being for performing any method described herein, comprising:
a first trapping system for generating a plurality of optical tweezer array traps for trapping a plurality of particles, in particular neutral atoms,
a second trapping system for generating a buffer trap for trapping a plurality of the particles adjacent the optical tweezer array traps,
a control system for moving the optical tweezer array traps and the buffer trap relative to each other and overlapping at least partly the optical tweezer array traps and the buffer trap for filling the optical tweezer array traps with a plurality of particles from the buffer trap and for forming a quantum register from at least some of the filled optical tweezer array traps offset from the buffer trap.

The second trapping system may be configured to generate at least part of the buffer trap as an optical dipole trap, e.g. providing one or more focused and/or at least partly overlapping laser beams. E.g. the second trapping system may comprise one or more lasers and optics.

The first and/or second trapping system may comprise one or more optical controllers for moving one or more optical beams, such as electro- and/or acoustooptical modulators, spatial light modulators, movable mirrors, etc., and/or optical switches, any of which may be controlled by the control system.

The system may comprise a source of particles, in particular neutral atoms, molecules or ions, for being trapped in the optical tweezer array traps and providing qubits and/or qudits, and it may comprise a transport system for transporting the particles from the source to the buffer trap. The transport system could comprise one or more of an optical guide beam, a slower such as a Zeeman slower and/or Stark slower, etc.

The system may comprise a computer configured to execute the steps of:
controlling the second trapping system to generate a buffer trap for trapping a plurality of the particles,
controlling the first trapping system to generating a plurality of optical tweezer array traps for trapping a plurality of particles, in particular neutral atoms,
controlling the first and/or second trapping system to move the optical tweezer array traps and the buffer trap relative to each other, and
controlling, before and/or during and/or after the step of controlling the first and/or second trapping system to move the optical tweezer array traps and the buffer trap relative to each other, the first and/or second trapping system to overlap at least partly the buffer trap and the optical tweezer array traps for filling the optical tweezer array traps with a plurality of particles from the buffer trap, and
controlling the first trapping system to form a quantum register from at least some of the filled optical tweezer array traps offset from the buffer trap.

The computer may be comprised in the control system.

Further, herein are provided a computer program product comprising instructions to cause the system described herein to execute the steps of any method described herein, and an associated computer-readable medium having stored thereon the computer program product.

A quantum processor, preferably a neutral atom quantum processor, comprising the optical trapping system described herein is also provided.

Thus, various embodiments may be implemented as a program product for use with a computer system, where the program(s) of the program product define functions of the embodiments (including the methods described herein). In one embodiment, the program(s) can be contained on a variety of non-transitory computer-readable storage media, where, as used herein, the expression "non-transitory computer readable storage media" comprises all computer-readable media, with the sole exception being a transitory, propagating signal. In another embodiment, the program(s) can be contained on a variety of transitory computer-readable storage media. Illustrative computer-readable storage media include, but are not limited to: (i) non-writable storage media (e.g., read-only memory devices within a computer such as CD-ROM disks readable by a CD-ROM drive, ROM chips or any type of solid-state nonvolatile semiconductor memory) on which information is permanently stored; and (ii) writable storage media (e.g., flash memory, floppy disks within a diskette drive or harddisk drive or any type of solid-state random-access semiconductor memory) on which alterable information is stored.

Hence, herein is provided a method of quantum computation, comprising repeatedly performing quantum computation operations using particles, such as neutral atoms, in an array of optical tweezers traps, and filling a buffer trap with a plurality of particles adjacent the array of optical tweezers traps while performing one or more of the quantum computation operations, and in between at least some of the quantum computation operations, relatively moving and temporarily overlapping the optical tweezers traps and the buffer trap to fill a plurality of the optical tweezers traps with particles from the buffer trap for the quantum computation operations. Thus, filling the optical tweezer array traps may be done effectively and efficiently.

### BRIEF DESCRIPTION OF THE DRAWINGS

The above-described aspects will hereafter be more explained with further details and benefits with reference to the drawings showing a number of embodiments by way of example.
Figs. 1A and 1B indicate parts of an exemplary system and associated exemplary method steps;
Figs. 2A and 2B indicate exemplary method steps.

### DETAILED DESCRIPTION OF EMBODIMENTS

It is noted that the drawings are schematic, not necessarily to scale and that details that are not required for understanding the present invention may have been omitted. The terms "upward", "downward", "below", "above", and the like relate to the embodiments as oriented in the drawings, unless otherwise specified. Further, elements that are at least substantially identical or that perform an at least substantially identical function are denoted by the same numeral, where helpful individualised with alphabetic suffixes. Further, unless otherwise specified, terms like "detachable" and "removably connected" are intended to mean that respective parts may be disconnected essentially without damage or destruction of either part, e.g. excluding structures in which the parts are integral (e.g. welded or moulded as one piece), but including structures in which parts are attached by or as mated connectors, fasteners, releasable self-fastening features, etc. The verb "to facilitate" is intended to mean "to make easier and/or less complicated", rather than "to enable".

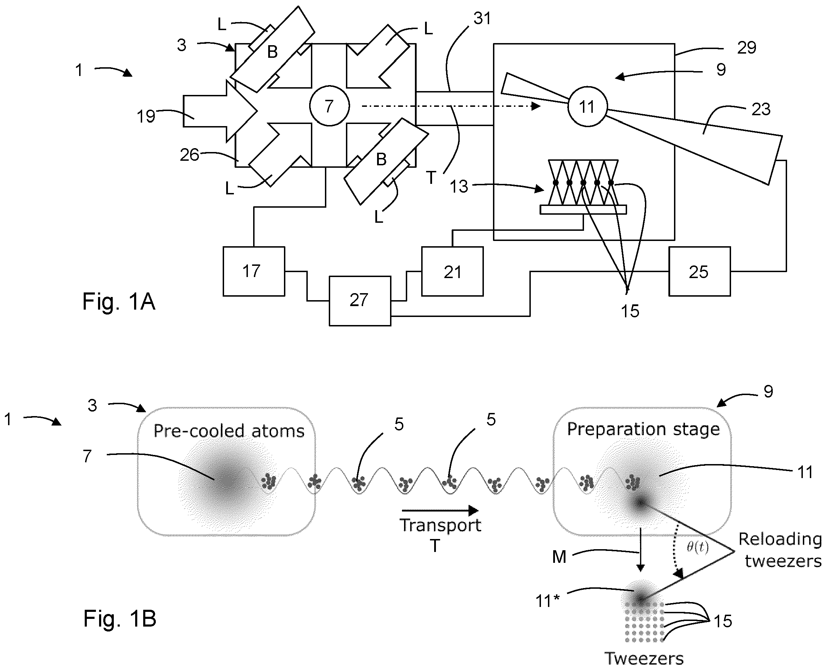

Figs. 1A and 1B indicate (parts of) a system 1 comprising: a source 3 of neutral atoms as particles 5 comprising a source trap 7, a preparation stage 9 comprising a buffer trap 11, and a trapping stage 13 comprising a plurality of optical tweezer array traps 15 for each trapping a particle 5.

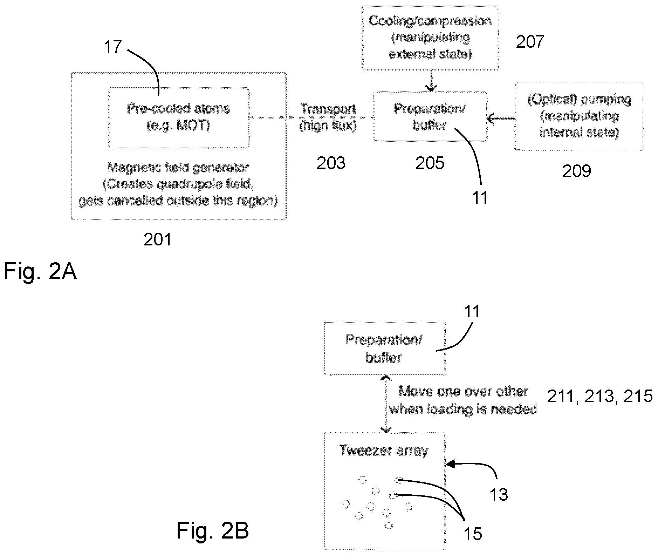

The source trap 7 may be provided by a source trapping system 17 , and preferably comprising a magneto-optical trap (MOT) which provides a cloud of ultra cold atoms. An optional push beam 19 is provided for transporting qudit particles 5 from (the source trap 7 of) the source 3 toward the preparation stage 9, see below. Also or alternatively, a standing wave dipole trap (conveyor belt) could be used, e.g. see Fig 2.

The optical tweezer array traps 15 are provided by a first trapping system 21, e.g. a laser system provided with a beam divider to split an initial beam into multiple trapping beams. Such beam divider may be realised in any suitable form to produce multiple trapping beams, e.g. comprising one or more of a refraction and/or a diffraction device, a phase manipulator etc. For instance, beam division can be done via diffraction with AODs, with interferences via an SLM or fixed phase patterns imprinted on a glass plate.

The shown buffer trap 11 is, as an option, formed as an optical dipole trap provided by laser beam 23, provided by a second trapping system 25.

The system 1 further comprises a computer 27 connected to one or more of the various trapping systems 19, 21, 25, for controlling same when running one or more appropriate computer programs which may be stored on a computer-readable medium (not shown). Further (sub-) systems for performing parts comprised in the system and/or functions associated with quantum computation operations may also be connected to and controlled by the computer 27. Any such connections may be one or more of wired, wireless and via the Internet; the computer may be a stand-alone device or a distributed system.

The source 3 may be contained in a first portion 26 and the preparation stage 11 and trapping stage 13 may be contained in a second portion 29 of a vacuum system, which may be formed as separate chambers and/or be separated by a channel and/or constriction 31. A channel and/or constriction 31 may allow a pressure difference between the portions 26, 29, and/or reducing effects of the source 3 on the preparation stage 9 and/or trapping stage 13 e.g. to reduce interference with a quantum computation operations; e.g. these two spatially separate portions may comprise any means, such as coils, electrodes, and/or shielding, to allow the two portions to operate as independent stages, with little or negligible interfering with each other. The atoms may be transported along a transport trajectory T through the channel and/or constriction 31 to the buffer trap 11. For this, the cold atom source 3 may be provided with the (3D) MOT 7 and push beam 19 and/or with one or more of a 2D-MOT, a Zeeman slower, a low-velocity intense source, a dipole beam and/or other transport system. A system for one or more of diverting, destroying, stopping, and blocking a flow, of atoms between the may be provided; e.g., a controllable transverse push beam may be provided for diverting and/or disturbing atoms from the beam so that they do not reach the second portion from the source, also or alternatively an atom beam blocker (e.g. a shutter and/or a valve, not shown) may be provided between, and/or in at least one of, the portions 26, 29 for blocking at least part of an atom beam and/or light from a slower (see below).

As illustrated by Figs. 1A, 1B, the system comprises a preparation stage (or buffer), in addition to a cold atom source and the optical tweezers array. The preparation stage 9 is separate from the main atom source 3 and the trapping stage 13 (optical tweezers array traps 15). The preparation stage 9 comprises the buffer trap 11 providing, as a preferred option, a cold gas cloud maintained in place using optical and/or magnetic means, in the shown example a dipole optical trap 11.

The preparation stage 9 serves to temporarily store particles 5 which are received (preferably: continuously) from the source 3 before they can be transferred to (the tweezer array traps 15 of) the trapping stage 13 to load trap sites (e.g., vacant trap sites may be individual tweezer array trap locations of the array 15 in which no particle is trapped). The trapping stage 3 may be out of line from the source 3 and/or the transport trajectory T. In case of an optical dipole trap for the buffer trap, the trapping beam 23 preferably is oriented crossing the transport trajectory, not colinear. This may increase trapping particles by presenting a larger trapping gradient to the transported particles due to a radial focus intensity gradient being larger than an axial focus gradient.

Particles 5 stored in the preparation stage 9 may be prepared before being transferred to the tweezer array 13. This may include compressing and laser-cooling the particles 5 stored in the trap 11, one of the goals possibly being to increase a density of the atomic ensemble, which may help loading the tweezers 15 more rapidly.

The tweezer array traps are loaded from the buffer trap 11, by moving the buffer trap 11 over the tweezer array traps 15 and/or or moving the tweezer array traps 15 over the buffer trap 11.

In both cases, the traps are overlapped and at least part of the tweezer array traps 15 are loaded together. Although the loading may be near-deterministic, the loading may be a stochastic process and loading a trap may not necessarily lead to a filled trap, e.g. initially trapped particles may still escape a trap and/or trapping multiple particles in a trap may cause loss of both particles from the trap; hence a trap may be filled and emptied multiple times during the overlapping. The loading of the tweezer array traps 15 may be monitored, e.g. using imaging.

E.g. in Fig. 1B is indicated a temporary movement of the trapping beam 23 of the buffer trap 11 from a first position to a second position 11 * relative to the system over an angle θ(t). The tweezer array traps 15 may remain stationary in the system. As a result the buffer trap 11 * overlaps at least part of the tweezer array traps 15 indicated with 11*. The movement may, e.g., be due to a driving frequency change in an AOM directing the beam 23 and/or a phase change on a spatial light modulator. The direction of movement M, and hence the trajectory of the buffer trap 11 and tweezer array traps 15 with respect to each other, is preferably substantially transverse to the transport trajectory T, thereby bringing the buffer trap 11 => 11 * out of the stream of particles 5 from the source 3.

As an effective solution, as shown, the buffer trap may be provided as an optical dipole trap 11. An optical dipole trap may be moved (with respect to a laboratory frame) using acousto-optic modulators (AOMs) and/or other optical elements. Moving the buffer trap over may be done by transiently changing a control frequency of an AOM. Also or alternatively, at least some of the tweezers array traps 15 may be moved in a same way. Relatively moving and overlapping the tweezers array traps 15 and the buffer trap 11 may comprise moving either or both of the traps 11, 15 with respect to a laboratory frame. The movement may be a forth-and-back movement or a continuous movement.

After sufficient loading and/or after a predetermined amount of time and/or after one or more other procedures for loading the tweezers array traps 15 from the buffer trap 11, the buffer trap 11 may be adjusted and/or switched off, but preferably the buffer trap 11 and the tweezers array traps 15 are moved with respect to each other for ending the overlapping and spatially separating the buffer traps 11 and the optical tweezers traps 15, and forming at least part of the quantum register from at least some of the (thus filled) optical tweezer array traps 15 offset from the buffer trap 11. Considerations for such movement for at least partly ending overlapping of the buffer trap 11 and the tweezers array traps 15 and for spatially separating them may equal, mutatis mutandis, considerations for a movement of the tweezers array traps 15 and the buffer trap 11 to cause at least partly overlapping the buffer trap 11 and the tweezers array traps 15, as set out above.

Figs. 2A and 2B indicate exemplary method steps:
In step 201 atoms are pre-cooled in a Magneto-Optical Trap (MOT). An associated magnetic field generator may create a quadrupole field for the MOT; the magnetic field may decay and/or be cancelled outside of the MOT-zone and/or the source 3 (Fig. 1).

Step 203 comprises transport of the atoms with a high flux from the source to a buffer trap 11 in a preparation stage 9; the atoms are trapped in the buffer trap (step 205). There, the atoms may be subjected to one or more of cooling, compression, external state manipulation (207) and/or internal state manipulation (209) such as by optical pumping.

In step 211 the tweezer array traps 15 and the buffer trap 11 are moved with respect to each other and temporarily overlapped for loading the tweezer array traps 15 with atoms from the buffer trap 11, in step 213. After loading, the traps 11, 15 are moved again to separate them spatially, in step 215.

It is noted that the buffer trap may be released, at least temporarily; preferably the trap is kept on or switched on directly after loading to retain and/or recapture at least some, preferably as many as possible, of the quantum particles. This may accelerate loading and/or reduce background density of particles at or near the trapping stage 13.

Thus, with the presently provided techniques, (vacant traps in) the tweezers array traps no longer need to be loaded directly from the cold atom source and/or from the background pressure. This reduces the time required for preparing the quantum register. The quantum register can be reloaded faster after each computation cycle, which results in an increase of the repetition rate.

It is noted that individual loading of tweezers array traps by overlapping the buffer trap is in principle possible but this is very slow and prone to errors, e.g. in particular in case of low trap life times compared to the duration of quantum computation operations and/or sequences thereof, and/or sensitive to variations and/or drifts in the system, and generally undesired for the destructive readout techniques of all or at least relevant parts of the quantum register, forming part of the most tried and trusted quantum computation protocols.

Also or alternatively, and as indicated at least partly elsewhere, one or more of the following may apply:
A stream of transported particles, e.g. an atomic jet from the source 3 may be not in line of sight of the register, thus preventing register errors resulting from collisions with the incoming particles (losses/unwanted loading).

The source 3, e.g. a MOT area, and a quantum register area of trapping stage 13 may be separated. This may help to deal with parasitic light and/or magnetic fields from the source 3.

The atoms in the source 3 and preparation stage 9 may be at different temperatures, e.g. particles in the buffer trap 11 may be trapped at, and/or cooled to, lower temperature than those in a preceding stage. E.g. an additional cooling stage may be implemented during the transport. This could be done using a variety of techniques, including (but not limited to) optical molasses and Raman cooling. Also or alternatively, the density in the buffer trap 11 may be increased e.g. in order to improve the loading rate of the tweezers array traps via compression and cooling, possibly using one or more of a Raman cooling scheme, (lambda-enhanced) gray molasses, and velocity-selective coherent population trapping. Increased density and in particular cooling may allow higher filling ratios and/or allow to reduce power to generate the tweezer array traps in the register, which may allow larger arrays and/or larger numbers of traps for a given laser power.

In order to prepare the quantum particles in a desired quantum state, (e.g. preparing atoms in a particular internal state) prior to loading the tweezers array traps, they can be manipulated, e.g. optically pumped following one or more protocols. Use of state-dependent light shifts and/or other effects could permit to select particles that are in a desired state.

The present concepts are not limited to a single particle type but could be employed for two or more types, e.g. combinations of two or more atomic species.

A magnetic field can be applied to the preparation stage 11 independently from features of the source 3 (e.g. MOT) and/or from (the tweezers array traps 15 of) the trapping stage 13. E.g. due to the spatial separation of the stages 3, 9, 13, a special coil configuration may be used to cancel magnetic fields used for the source 3 (e.g. quadrupole MOT coils) at the position of the preparation stage 9 and the trapping stage 13. This could allow them to function largely or substantially fully independently.

The disclosure is not restricted to the above-described embodiments which can be varied in a number of ways within the scope of the claims, wherein elements and aspects discussed for or in relation with a particular embodiment may be suitably combined with elements and aspects of other embodiments, unless explicitly stated otherwise.

## Claims

1. A method for quantum computation using a plurality of particles (5) in an array of optical tweezer traps (15) as a quantum register,
wherein the method comprises:
trapping a plurality of the particles (5) in a buffer trap (11),
moving the optical tweezer array traps (15) and the buffer trap (11) relative to each other,
simultaneously overlapping at least partly the optical tweezer array traps (15) and the buffer trap (11) for filling a plurality of particles (5) from the buffer trap into at least some of the optical tweezer array traps (15), and
forming at least part of the quantum register from at least some of the thus filled optical tweezer array traps (15) offset from the buffer trap (11).

2. The method according to claim 1, wherein the moving of the optical tweezer array traps (15) and the buffer trap (11) relative to each other takes place after the overlapping for spatially separating filled optical tweezer array traps from the buffer trap.

3. The method according to any preceding claim, comprising loading the buffer trap (11) with particles (5) while performing quantum computation operations using at least some particles in the optical tweezer array traps (15).

4. The method according to any preceding claim, comprising the steps of performing one or more quantum computation operations using at least some particles (5) in the optical tweezer array traps (15) and releasing part or all of the at least some particles thereafter.

5. The method according to any preceding claim, comprising controlling transport of at least part of the particles (5) from a particles source (3) to the buffer trap.

6. The method according to any preceding claim, comprising:
controlling transport of at least part of the particles (5) from a particles source (3) to the buffer trap (11) along a transport trajectory (T), and
controlling the moving of the number of optical tweezer array traps (15) and the buffer trap (11) relative to each other along a trajectory that is at a nonzero angle to the transport trajectory (T), in particular at an angle to the transport directory in a range of 30-150 degrees, preferably in a range of 45-135 degrees more preferably in a range of 60-120, e.g. in a range 80-100 degrees.

7. The method according to any preceding claim, wherein moving the number of optical tweezer array traps (15) and the buffer trap (11) relative to each other comprises controlling one or more of position, velocity, acceleration and jerk of at least one of the number of optical tweezer array traps (15) and the buffer trap (11), relative to each other and/or relative to an external reference.

8. The method according to any preceding claim, comprising subjecting at least some of the particles (5) in the buffer trap (11) to at least one of cooling, compression, optical pumping, internal manipulation, external state manipulation, prior to and/or during the overlapping at least partly the buffer trap (11) and the number of optical tweezer array traps (15).

9. Optical trapping system (1) for quantum computation, comprising
a first trapping system (21) for generating a plurality of optical tweezer array traps (15) for trapping a plurality of particles (5), in particular atoms that may be neutral atoms,
a second trapping system (25) for generating a buffer trap (11) for trapping a plurality of particles (5) adjacent the optical tweezer array traps (15),
a control system (27) for moving a number of the optical tweezer array traps (15) and the buffer trap (11) relative to each other and overlapping at least partly the number of optical tweezer array traps (15) and the buffer trap (11) for filling particles (5) from the buffer trap (11) into at least some of the number of optical tweezer array traps (15) and for forming a quantum register from at least some of the filled optical tweezer array traps (15) offset from the buffer trap (11).

10. System (1) according to claim 9, wherein the second trapping system (25) is configured to generate at least part of the buffer trap (11) as an optical dipole trap.

11. System (10 according to any one of claims 9-10, comprising a source (3) of particles (5), in particular one or more of neutral atoms, molecules, and ions, for being trapped in the optical tweezer array traps (15) and a transport system for transporting the particles from the source to the buffer trap.

12. System according to any one of claims 9-11, comprising a computer (27) configured to execute the steps of:
controlling the second trapping system (25) to generate a buffer trap (11) for trapping a plurality of the particles (5),
controlling the first trapping system (21) to generating a plurality of optical tweezer array traps (15) for trapping a plurality of particles (5), in particular neutral atoms, and
controlling the first and/or second trapping system (25; 27) to move a number of the optical tweezer array traps (15) and the buffer trap (11) relative to each other and overlap at least partly the number of optical tweezer array traps (15) and the buffer trap (11) for filling a plurality of particles (5) from the buffer trap (11) into at least some of the number of optical tweezer array traps (15) and form a quantum register from at least some of the thus filled optical tweezer array traps (15) offset from the buffer trap (11).

13. A computer program product comprising instructions to cause the system of claim 12 to execute the steps of the method of any one of claims 1-8.

14. A computer-readable medium having stored thereon the computer program product of claim 13.

15. A quantum processor, preferably a neutral atom quantum processor, comprising the optical trapping system (1) according to any of claims 9-11.
